(19) **Europäisches Patentamt**
**European Patent Office**
**Office européen des brevets**

(11) **EP 1 506 530 B1**

(12) **EUROPEAN PATENT SPECIFICATION**

(45) Date of publication and mention
of the grant of the patent:
**08.10.2008 Bulletin 2008/41**

(51) Int Cl.:
*G06T 15/70* (2006.01)   *G06T 15/30* (2006.01)
*A63F 13/00* (2006.01)

(21) Application number: **03725820.9**

(22) Date of filing: **16.05.2003**

(86) International application number:
**PCT/JP2003/006170**

(87) International publication number:
**WO 2003/098554 (27.11.2003 Gazette 2003/48)**

(54) **THREE DIMENSIONAL IMAGE PROCESSING PROGRAM, THREE DIMENSIONAL IMAGE PROCESSING METHOD, AND VIDEO GAME DEVICE**

BILDVERARBEITUNGSPROGRAMM, BILDVERARBEITUNGSMETHODE UND BILDVERARBEITUNGSGERÄT FÜR EIN DREIDIMENSIONALES VIDEOSPIEL

PROGRAMME ET PROCEDE DE TRAITEMENT D'IMAGES EN TROIS DIMENSIONS, ET DISPOSITIF DE JEU VIDEO

(84) Designated Contracting States:
**DE FR GB**

(30) Priority: **21.05.2002 JP 2002146638**

(43) Date of publication of application:
**16.02.2005 Bulletin 2005/07**

(73) Proprietor: **Konami Digital Entertainment Co., Ltd.**
**Tokyo 107-8324 (JP)**

(72) Inventors:
• **HIGASHIYAMA, Makoto**
**Sakurai-shi, Nara 633-0054 (JP)**
• **NAGAYAMA, Kentaro**
**Osaka-shi, Osaka 534-0016 (JP)**

(74) Representative: **Jenkins, Peter David et al**
**Page White & Farrer**
**Bedford House**
**John Street**
**London WC1N 2BF (GB)**

(56) References cited:
**US-A1- 2002 032 053**

• **PATENT ABSTRACTS OF JAPAN vol. 1998, no. 06, 30 April 1998 (1998-04-30) -& JP 10 031410 A (NAMCO LTD), 3 February 1998 (1998-02-03)**
• **PATENT ABSTRACTS OF JAPAN vol. 2002, no. 02, 2 April 2002 (2002-04-02) -& JP 2001 276414 A (NAMCO LTD), 9 October 2001 (2001-10-09)**
• **"game program: ASTEROIDS (CX2649)" [Online] 1981 , ATARI, INC. XP002251849 Retrieved from the Internet: <URL: http://www.atariage.com/ software_page.html ?SoftwareLabelID=1007> [retrieved on 2003-08-20] the whole document**

EP 1 506 530 B1

**Description**

Technical Field

The present invention relates to a three dimensional image processing program, a three dimensional image processing method, and a video game device for displaying a plurality of objects that move inside a virtual three dimensional space.

Background Art

A variety of video games that display objects such as characters and the like in a virtual three dimensional space that is produced in a monitor screen have grown popular in recent years. Many of these video games have sports-related themes such as skiing, surfing, ice skating, snowboarding, and the like. In order to satisfy the desires of users, video games having these types of sports themes must, to the greatest degree possible, duplicate the unique characteristics of each sport and provide the user with the feeling that they are actually participating in it. For example, a video game having a skiing or snowboarding theme should allow the user to feel as if he or she is competing in a snowfall.

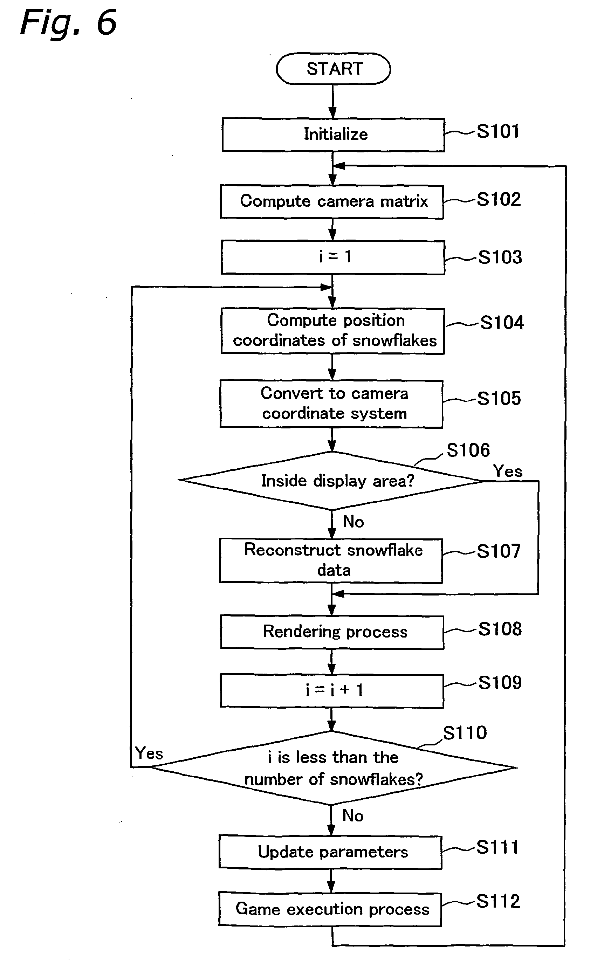

Fig. 6 is a flow chart that illustrates an example of a prior art three dimensional image process for duplicating a snowfall. The prior art three dimensional process shown in Fig. 6 is employed and executed in a video game device comprising an arithmetic processing unit that is capable of executing a variety of processes including switch processing, and a render processing unit that is provided exclusively for render processing.

In Step S101, the arithmetic processing unit initializes the parameters for snowflakes. In Step S102, the arithmetic processing unit calculates a camera matrix for converting from a world coordinate system to a camera coordinate system. Note that the computational routine that computes this camera matrix can be calculated by employing a preexisting library in the video game device.

In Step S103, the arithmetic processing unit assigns the value 1 to the loop counter i. In Step S104, the arithmetic processing unit computes the new post-movement position coordinates of snowflakes by adding the speed at which they move and the external force applied thereto to their initial position coordinates. In Step S 105, the arithmetic processing unit converts the post-movement position coordinates of the snowflakes from the world coordinate system to the camera coordinate system. In Step S106, the arithmetic processing unit determines whether or not the post-movement position coordinates of a snowflake is within a display area in which the snowflakes can be displayed. The process then moves to Step S 108 if the post-movement position coordinates of a snowflake are within the display region (Step S106 is yes), and moves to Step S107 if the post-movement position coordinates of a snowflake are outside the display area (Step S106 is no).

In Step S107, if it is determined that the post-movement position coordinates of a snowflake are outside the display area, the arithmetic processing unit will reconstruct the snowflake data. In Step S,I 08, the arithmetic processing unit will perform a rendering process on the snowflake. In Step S109, the arithmetic processing unit will increment the loop counter i upward by 1.

In Step S110, the arithmetic processing unit will determine whether or not the loop counter i is less than a predetermined number of snowflakes. All of the snowflakes will be rendered by repeating the processes of Steps S104 to Step S109 for only the number of times that is equal to the number of snowflakes. This means that if it is determined that the loop counter i is less than the number of snowflakes (Step S110 is yes), then there are snowflakes that have not yet been rendered and thus the process returns to Step S104. If it is determined that the loop counter is greater than the number of snowflakes (Step S110 is no), all of the snowflakes have been rendered and the process moves to Step S111. In Step S111, the arithmetic processing unit will update each snowflake parameter. In Step S 112, the arithmetic processing unit will carry out a game execution process. Then, after the game execution process has been carried out, the process returns to Step S102.

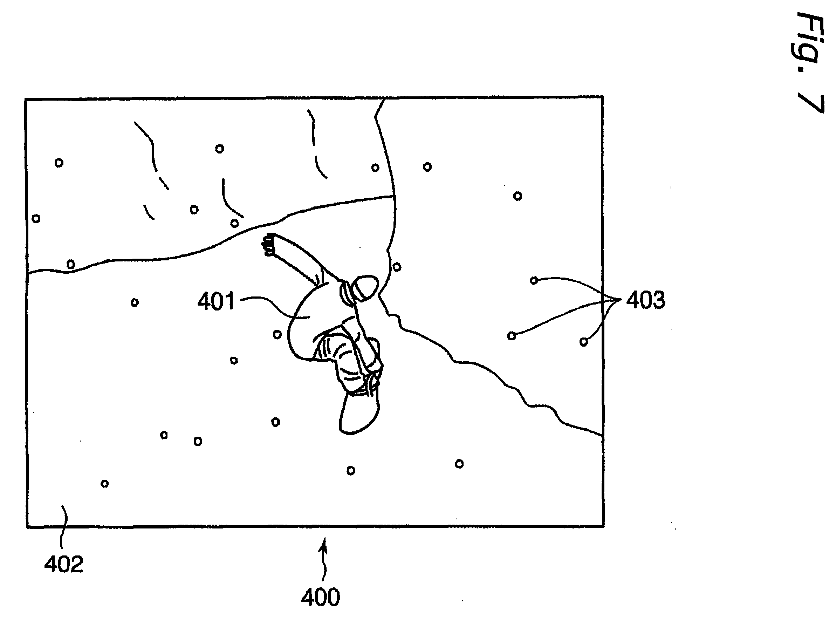

Fig. 7 shows an example of a game screen in which snowflakes rendered by the prior art three dimensional image process are displayed. The game screen 400 of Fig. 7 shows a character 401 that represents a snowboarder and which is manipulated by a user, a course 402 on which the character 401 is sliding down, and snowflakes 403 that serve to duplicate snowfall. The snowflakes 403 are displayed on the game screen 400 by carrying out the prior art three dimensional image process, and snowfall is duplicated.

In the prior art three dimensional image process flowchart shown in Fig. 6, the process of Step S106 is carried out by the render processing unit. The other processes of Steps S101 to S107 and Steps S109 to S112 are carried out by the arithmetic processing unit, which is capable of executing a variety of processes including switch processing. When the prior art three dimensional image process duplicates snowfall, there will be a greater burden on the arithmetic process when it carries out complex switch processing and the like, and thus the arithmetic process will take time to complete. Thus, as shown in the game screen of Fig. 7, there will be a fewer number of snowflakes produced by the prior art three dimensional process. Thus, when duplicating an environment in which a large quantity of snow is falling, it will be difficult to provide a realistic feeling of snowfall because the number of snowflakes, that can be duplicated will be reduced. Because of this, prior art video games cannot provide users with a sufficient sense of realism when duplicating snowfall, and thus are not enjoyable.

Patent Abstracts of Japan vol. 1998, no. 06, 30 April 1998 (1998-04-30) -& JP 10 031410 A (Namco Ltd), 3 February 1998 (1998-02-03) discloses three dimensional simulator equipment and an information recording medium. Based on a field of view and a falling speed, moving directions of falling objects in a view point coordinate system are determined. A speed, its direction, and the number of an array are varied based on the positions in the object space and time information to represent a side wind varying in place and time.

US 2002/0032053 discloses entertainment apparatus, storage medium, and a method of deciding weather. A global weather deciding part decides weather in each global area obtained by dividing a map of a virtual world into a plurality of global areas. The weather in the global area in question is decided at intervals of a first time, in accordance with a preset behavior model and considering area information of each global area in advance. A local weather deciding part decides weather in each local area obtained by dividing each global area into a plurality of local areas. The weather in the local area in question is decided at intervals of a second time, which is shorter than the first time, in accordance with the weather of the global area concerned decided by the global weather deciding part, and considering area information of each local area.

Summary of the invention

In order to solve the aforementioned problems, it is an object of the present invention to provide a three dimensional image processing program, three dimensional image processing method, and video game device that can reduce the burden on the arithmetic processing device of the video game device and render a large number of objects.

The present invention disclosed in claim 1 is a three dimensional image processing program for rendering a plurality of objects that move in a virtual three dimensional space and which controls a video game device, comprising: position coordinate computation means that computes post-movement position coordinates of objects in a virtual three dimensional space; position coordinate modification means that modifies the post-movement position coordinates of the objects that are outside of a display area in which the objects will be displayed such that the post-movement position coordinates are kept within the display area; and rendering means that renders the objects within the display area, characterized in that the position coordinate modification means is arranged to modify the post-movement position coordinates of the objects that are outside of the display area in which the objects will be displayed such that the post-movement position coordinates are kept within the display area by carrying out a mask process to acquire low order bits of the post-movement position coordinates based on a conjunction between the post-movement position coordinates defined in integers of the objects that are inside and outside of the display area, and a length of a side of the display area, which has a value of the nth power of 2, in which the value 2 has been subtracted therefrom, and by modifying a value of the mask process depending on a position of origin of relative coordinate system for the objects.

According to the invention disclosed in claim 1, the three dimensional image processing program renders a plurality of objects that move within a virtual three dimensional space and operates a video game device, and is comprised of position coordinate computation means that computes the post-movement position coordinates of an object within a virtual three dimensional space, position coordinate modification means that modifies the post-movement position coordinates of the objects such that the post-movement position coordinates of the objects calculated by the position coordinate computation means are kept within a predetermined display area, and rendering means that renders the objects that were updated such that they are kept within the display area by the position coordinate modification means.

Here, the post-movement position coordinates of objects that move within the virtual three dimensional space are computed, and the post-movement position coordinates of the objected calculated thereby are modified such that the post-movement position coordinates are kept to the display area in which the objects are displayed. Then, the objects in which the post-movement position coordinates thereof were modified to be within the display area are rendered.

Thus, after the initial parameters of the objects have been established, the post-movement position coordinates of the objects within the virtual three dimensional space are computed. Next, the post-movement position coordinates of the objects that were calculated thereby are modified such that they are kept within the display area in which the objects are displayed. When this occurs, the burden on the arithmetic processing unit can be reduced, and a large number of objects can be rendered, because it will no longer be necessary to conduct switch processing to determine whether the post-movement position coordinates of the objects are within the display area.

According to the present invention disclosed in claim 2, the display area is defined as a rectangular area in the virtual three dimensional space.

According to the invention disclosed in claim 2, the display area in which the objects can be displayed is rectangular in shape. The position coordinate modification means may modify the post-movement position coordinates of the objects such that the post-movement position coordinates are kept within the display area by subtracting the length of at least one side of the rectangular display area from the post-movement position coordinates of the objects.

In other words, the post-movement position coordinates of objects that are outside the display area can be returned to inside the display area by subtracting the length of at least one side of the rectangular display area in which objects can be displayed from the post-movement position coordinates of the objects. Thus, unlike in the prior art, there is no need to employ switch processing to determine whether or not the post-movement position coordinates of the objects are inside the display area.

In the invention disclosed in claim 1, the position coordinates of the objects are expressed in integers for bit computation.

In the present invention according to claim 1, the position coordinates of the objects are expressed as integers. The position coordinate modification means keeps the objects inside the display area by means of a mask process that acquires the low order bits of the position coordinates of the objects.

In other words, because the position coordinates are expressed as integers, bit computation can be employed to compute the post-movement position coordinates of the obj ects. Thus, computational speed can be increased when compared to situations in which floating point values are used for the position coordinates of the objects. Furthermore, by mask processing the post movement position coordinates of the objects, when the length of at least one side of the rectangular display area is subtracted from the post-movement position coordinates of the objects, not only will it become unnecessary to conduct switch processing in order to determine whether or not the post-movement position coordinates of the objects are inside the display area, as found in the prior art, but the objects can be kept inside the display area with a simple computational process.

In the invention according to claim 3, the video game device can be further controlled by a texture storage means that stores a plurality of texture data that express different shapes; and
the rendering means renders the obj ects based upon the texture data stored in the texture storage means.

In the invention disclosed in claim 3, the video game device can be further controlled by a texture storage means that stores a plurality of textures that have different shapes, and the rendering means renders the objects based upon the textures stored in the texture storage means.

In other words, because the objects are rendered based upon textures stored in the texture storage means, a variety of objects can be expressed by storing a plurality of textures having different shapes therein, and the contents of video game can be diversified.

In the invention disclosed in claim 4, the plurality of texture data include texture data that express snow.

According to the invention disclosed in claim 4, the textures include textures that express snow.

In other words, snowfall can be duplicated in a video game by rendering objects with textures that express snow. Thus, by storing a plurality of different types of snow textures having different shapes, a plurality of different types of snow textures can be employed and various shapes of snow can be expressed. By rendering snow that is expressed in a variety of shapes, a great variety of different snowfalls can be duplicated, and a snowfall that feels real can be produced.

In the invention disclosed in claim 5, a video game device comprises an arithmetic processing unit that can execute a variety of processes including a switch processing, and a render processing unit that is provided exclusively for render processing;
wherein the render processing unit functions as the position coordinate computation means and the position coordinate modification means.

According to the invention disclosed in claim 5, a video game device comprises an arithmetic processing unit that can execute a variety of processes including switch processing and a render processing unit that is provided exclusively for render processing, and the render processing unit functions as the position coordinate computation means and the position coordinate modification means.

In other words, the arithmetic processing unit is capable of executing a variety of processes, including switch processing. The rendering process device is not provided with a complex arithmetic processing function for switch processing and the like, but instead has a simple arithmetic processing function so that it can conduct arithmetic processing at high speeds. Here, switch processing is not involved in the process of computing the post-movement position coordinates of objects in a virtual tree dimensional space, nor in the process of modifying the post-movement position coordinates of objects calculated thereby such that they are kept inside the display area in which the objects are displayed. Thus, the process of computing the post-movement position coordinates of objects and the process of modifying the post-movement position coordinates of objects are not executed by the arithmetic processing unit, and thus the burden on the arithmetic processing unit can be reduced because these processes are executed on a render processing unit that can conduct these calculations faster than the arithmetic processing unit.

In the invention disclosed in claim 6, a three dimensional image processing method that renders a plurality of objects that move in a virtual three dimensional space, comprising the steps of: a position coordinate computation step in which a video game device computes post-movement position coordinates of objects in a virtual three dimensional space; a position coordinate modification step in which the video game device modifies the post-movement position coordinates of the objects that are outside of a display area in which the objects will be displayed such that the post-movement position coordinates are kept within the display area; and a rendering step in which the video game device renders the objects within the display area, characterized in that the position coordinate modification step modifies the post-movement position coordinates of the objects that are outside of the display area in which the objects will be displayed such that the post-movement position coordinates are kept within the display area by carrying out a mask process to acquire low order bits of the post-movement position coordinates, based on a conjunction between the post-movement position coordinates defined in integers of the objects that are inside sand outside of the display area, and a length of a side of the display area, which has a value of the nth power of 2, in which the value 2 has been subtracted therefrom, and by modifying a value of the mask process depending on a position of origin of relative coordinate system for the objects.

According to the invention disclosed in claim 6, the three dimensional image processing method renders a plurality of objects that move within a virtual three dimensional space, and includes a position coordinate computation step in which the video game device computes the post-movement position coordinates of objects within a virtual three dimensional space, a position coordinate modification step in which the video game device modifies the post-movement position coordinates of the objects such that the post-movement position coordinates of the objects computed in the position coordinate computation step are kept within a predetermined display area, and a rendering step in which the video game device renders the obj ects that were modified in the position coordinate modification step so as to supply them within the display area.

Here, the post-movement position coordinates of objects that move within the virtual three dimensional space are computed, and the post-movement position coordinates of the objected calculated thereby are modified such that the post-movement position coordinates are kept to the display area in which the objects are displayed. Then, the objects in which the position coordinates thereof were modified so as to be within the display area are rendered.

In other words, after the initial parameters of the objects have been established, the post-movement position coordinates of the objects within the virtual three dimensional space are computed. Next, the post-movement position coordinates of the objects that were calculated thereby are modified such that they are kept within the display area in which the objects are displayed. When this occurs, the burden on the arithmetic processing unit can be reduced, and a large number of objects can be rendered, because it will no longer be necessary to conduct switch processing to determine whether the post-movement position coordinates of the objects are within the display area.

In the invention disclosed in claim 7, a video game device that renders a plurality of objects that move in a virtual three dimensional space, comprising: position coordinate computation means that computes post-movement position coordinates of objects in a virtual three dimensional space; position coordinate modification means that modifies the post-movement position coordinates of the objects that are outside of a display area in which the objects will be displayed such that the post-movement position coordinates are kept within the display area in which the objects will be displayed; and rendering means that renders the objects within the display area, characterized in that the position coordinate modification means is arranged to modify the post-movement position coordinates of the objects that are outside of the display area in which the objects will be displayed such that the post-movement position coordinates are kept within the display area by carrying out a mask process to acquire low order bits of the post-movement position coordinates, based on a conjunction between the post-movement position coordinates defined in integers of the objects that are inside and outside of the display area, and a length of a side of the display area, which has a value of the nth power of 2, in which the value 2 has been subtracted therefrom, and by modifying a value of the mask process depending on a position of origin of relative coordinate system for the obj ects.

According to the invention disclosed in claim 7, the video game device renders a plurality of objects that move within a virtual three dimensional space, and is comprised of position coordinate computation means that computes the post-movement position coordinates of an object within a virtual three dimensional space, position coordinate modification means that modifies the post-movement position coordinates of the objects such that the post-movement position coordinates of the objects calculated by the position coordinate computation means are kept within a predetermined display area, and rendering means that renders the objects that were modified by the position coordinate modifying means such that they are kept inside the display area.

Here, the post-movement position coordinates of objects that move within the virtual three dimensional space are computed, and the post-movement position coordinates of the objects computed thereby are modified such that the post-movement position coordinates are kept to the display area in which the objects are displayed. Then, the objects in which the post-movement position coordinates thereof were modified so as to be within the display area are rendered.

In other words, after the initial parameters of the objects have been established, the post-movement position coordinates of the objects within the virtual three dimensional space are computed. Next, the post-movement position coordinates of the objects that were calculated thereby are modified such that they are kept within the display area in which the objects are displayed. When this occurs, the burden on the arithmetic processing unit can be reduced, and a large number of objects can be rendered, because it will no longer be necessary to conduct switch processing to determine whether the post-movement position coordinates of the objects are within the display area.

These and other objects, features, aspects and advantages of the present invention will become apparent to those skilled in the art from the following detailed description, which, taken in conjunction with the annexed renderings, discloses a preferred embodiment of the present invention.

Brief Description Of The Renderings

Referring now to the attached renderings which form a part of this original disclosure:

Fig. 1 is a block diagram showing the structure of a video game device according to one embodiment of the present invention;

Fig. 2 is a block diagram showing the primary functions of the video game device shown in Fig. 1;

Fig. 3 shows examples of textures used in the present embodiment;

Fig. 4 is a flow chart showing an example of a three dimensional image process used in the video game device shown in Fig. 1;

Fig. 5 shows an example of a game screen in which snowflakes rendered by the three dimensional image process of the present embodiment are displayed;

Fig. 6 is a flow chart that illustrates an example of a prior art three dimensional image process for duplicating snowfall; and

Fig. 7 shows an example of a game screen in which snowflakes rendered by a prior art three dimensional image process are displayed.

Best Mode For Carrying Out The Invention

A video game device according to one embodiment of the present invention will be described below with reference to the figures.

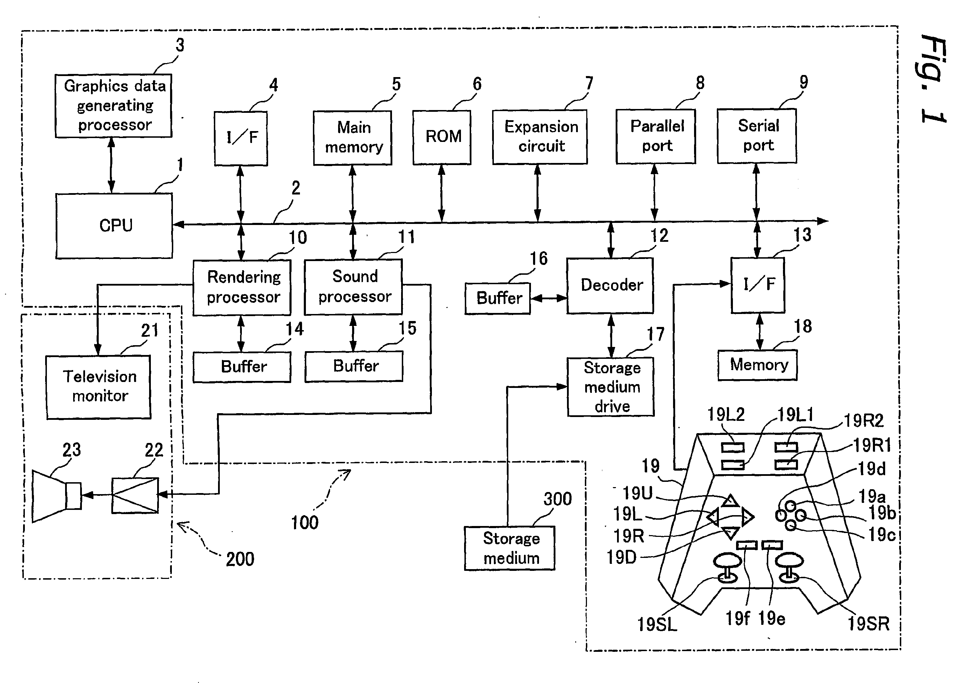

Fig. 1 is a block diagram showing the structure of a video game device according to one embodiment of the present invention. Note that a video game device for home use is used as an example of the video game device of the present invention, and is comprised of a home video game unit that is connected to a standard household television. However, the present invention is not particularly limited to this example, and can be applied in the same way to a commercial video game device that is formed to be integral with a monitor, to a personal computer that functions as a video game device by executing the video game program, or to other configurations obvious to one of ordinary skill in the art.

The video game device shown in Fig. 1 is comprised of a home video game unit 100 and a standard home television 200. The home game unit 100 includes a computer readable storage medium 300 on which a video game program and game data are stored. The video game program and the game data are read out as needed from the storage medium 300 to execute the game.

The home video game unit 100 includes a CPU (central processing unit) 1, a bus line 2, a graphics data generating processor 3, an interface circuit (I/F) 4, a main memory 5, a ROM (read only memory) 6, an expansion circuit 7, a parallel port 8, a serial port 9, a rendering processor 19, a sound processor 11, a decoder 12, an interface circuit (I/F) 13, buffers 14 to 16, a storage medium drive 17, a memory 18, and a controller 19. The home television 200 includes a television monitor 21, an amplifier 22, and a speaker 23.

The CPU 1 is connected to the bus line 2 and the graphics data generating processor 3. The bus line 2 includes an address bus, a data bus, a control bus, and the like, and the CPU 1, the interface circuit 4, the main memory 5, the ROM 6, the expansion circuit 7, the parallel port 8, the serial port 9, the rendering processor 10, the sound processor 11, the decoder 12, and the interface circuit 13 are mutually connected thereto.

The rendering processor 10 is connected to the buffer 14. The sound processor 11 is connected to the buffer 15 and the amplifier 22. The decoder 12 is connected to the buffer 16 and the storage medium drive 17. The interface circuit 13 is connected to the memory 18 and the controller 19.

The television monitor 21 of the home television 200 is connected to the rendering processor 10. The speaker 23 is connected to the amplifier 22. Note that with a commercial video game device, the television monitor 21, the amplifier 22, and the speaker 23 can be stored in one chassis together with each block that makes up the home game device 100.

In addition, if a personal computer, a workstation, or the like forms the core of the video game device, the computer display will correspond to the television monitor 21. Furthermore, the expansion circuit 7, the rendering processor 10, and the sound processor 11 correspond to a portion of the program data that is stored in the storage medium or the hardware on an expansion board that is mounted in an expansion slot on the computer. Moreover, the interface circuit 4, the parallel port 8, the serial port 9, and the interface circuit 13 correspond to the hardware on an expansion board that is mounted in an expansion slot of a computer. In addition, the buffers 14 to 16 each correspond to the main memory 5 or each memory area in an expansion memory.

Next, each system component shown in Fig. 1 will be described. The CPU 1 interprets commands from the video game program, and carries out various data processes and controls. For example, the CPU 1 supplies two dimensional image data, coordinate data on each vertex in a virtual three dimensional space, movement data, rotation data, and the like to the graphics data generating processor 3. The graphics data generating processor 3 plays a role as a co-processor for the CPU 1. In other words, the graphics data generating processor 3 carries out parallel processing for computing coordinate conversion, light source calculations, and the like, e.g., fixed point format matrixes and vectors.

The primary processes that the graphics data generating processor 3 carries out are a process in which address data on a target image process is calculated based upon the coordinate data of each vertex from the image data, movement data of each vertex from the image data, and rotation data of each vertex from the image data that are supplied from CPU 1 and is then returned to the CPU 1, and a process which computes the brightness of an image in response to the distance from a virtual light source.

The interface circuit 4 is employed as an interface for a peripheral device, e.g., a pointing device such as a mouse, a trackball, or the like. The main memory 5 is comprised of RAM (random access memory) and the like. Program data that serves as the operating system for the video game device is stored in the ROM 6. This program corresponds to the BIOS (basic input output system) of a personal computer.

The expansion circuit 7 expands compressed images that conform to the MPEG (Moving Picture Experts Group) standard for moving pictures or the JPEG (Joint Photographic Experts Group) standard for still pictures. Here, the images are compressed by means of the DCT (Discrete Cosine Transform) process, a quantization process, an encoding process, or the like. Compressed images are expanded by means of an inverse encoding process, inverse quantization process, IDCT (Inverse Discrete Cosine Transform) process, a decode process (decoding data encoded by Variable Length Code), and the like.

The rendering processor 10 conducts a rendering process in the buffer 14 based upon rendering commands issued by the CPU 1 every predetermined time period T (e.g., T =1/60 sec. for 1 frame).

The buffer 14 is comprised of RAM, for example, and is divided into a display area (frame buffer) and a non-display area. The display area is used as an expansion area for data that will be displayed on the display screen of the television monitor 21. The non-display area is used as a storage area for data that defines skeletons, model data that defines polygons, animation data that creates movement in models, pattern data that illustrates the details of each animation, texture data, color palette data, and the like.

Here, the texture data is two dimensional image data. The color palette data is data for specifying the color of texture data and the like. These data are read out one or a plurality of times from the storage medium 300 in response to the execution state of the game, and are stored in advance in the non-display area of the buffer 14 by means of the CPU 1.

The rendering commands include a rendering command which renders three dimensional images with polygons, and a rendering command which renders normal two dimensional images. Here, the polygons are two dimensional figures that have multiple angles, e.g., a triangle or a square. Coordinate data that illustrates the vertexes of the polygon coordinates is polygon vertex coordinate data.

The rendering commands that render three dimensional images with polygons are carried out with polygon vertex address data that points to the position in which the polygon vertex coordinate data is stored in the buffer 14, texture address data that points to the position in which textures that are placed on the polygons is stored in the buffer 14, color palette address data that points to the position in which the color palette data that illustrates the color of the textures is stored in the buffer 14, and brightness data that indicates the brightness of the textures.

The polygon vertex address data points to the address of the polygon vertex coordinate data in the display area of the buffer 14.

The polygon vertex address data is used by the graphics data generating processor 3 to permute three dimensional polygon vertex coordinate data to two dimensional polygon vertex coordinate data by converting these coordinates based upon movement data and rotation data. The polygon vertex address data is evaluated by substituting three dimensional polygon vertex coordinate data which is converted on the basis of movement data and rotation data by the graphics data generating processor 3 with two dimensional polygon vertex coordinate data. The brightness data is computed by the graphics data generating processor 3 in response to the distance from an image displayed by the polygon vertex coordinate data after coordinate conversion to a virtually positioned light source.

The rendering processor 10 writes texture data to the regions of the display area in buffer 14 to which three polygon vertex address data point to.

Objects such as characters and the like in the game space are comprised of a plurality of polygons. The CPU 1 links the coordinate data for each polygon in the virtual three dimensional space to vector data for skeletons that correspond thereto and stores this coordinate data in the buffer 14. Here, by operating the controller 19 (described below), the following processes will be carried out when character movement is displayed on the display screen of the television monitor 21 and when the view point of the character changes.

The CPU 1 provides the graphics data generating processor 3 with three dimensional coordinate data on the vertexes of each polygon stored in the non-display area of the buffer 14, and movement and rotation data for each polygon that is obtained from the skeleton coordinates and the rotation data therefor.

Then, the graphics data generating processor 3 sequentially obtains post-movement and post-rotational three dimensional coordinate data for each polygon based upon the three dimensional coordinate data for the vertexes of each polygon and the movement and rotational data for each polygon.

From amongst the three dimensional coordinate data for each polygon that was obtained in this manner, coordinate data in the horizontal and vertical directions is supplied to the rendering processor 10 as address data in the display area of the buffer 14, or in other words, as polygon vertex address data.

When this occurs, the rendering processor 10 writes texture data that is pointed to by the texture address data to the region of the display area of the buffer 14 that the three polygon vertex address data point to. In this way, objects comprising a plurality of polygons on which textures have been applied thereto are displayed on the display screen of the television monitor 21.

The rendering command that renders normal two dimensional images is carried out with vertex address data, texture address data, color palette address data, and brightness data. From amongst these data, the vertex address data is evaluated by two dimensional vertex coordinate data which is converted on the basis of the movement data and rotation data obtained from the CPU 1 by the graphics data generating processor 3.

The sound processor 11 stores APCM (Adaptive Differential Pulse Code Modulation) data read out from the storage medium 300 in the buffer 15. The ADPC data stored in the buffer 15 is the sound source.

In addition, the sound processor 11 reads out the ADPCM data from the buffer 15 based upon a clock signal, e.g., a clock signal having a frequency of 44.1 kHz. The sound processor 11 conducts processes such as pitch conversion, noise supplementation, envelope settings, level settings, and reverb settings, and the like for the ADPCM data read out from the buffer 15.

If the sound data read out from the storage medium 300 is PCM (Pulse Code Modulation) data such as CD-DA (Compact Disk Digital Audio), the sound processor 11 will convert the PCM data to ADPCM data. The processes of the program that relate to PCM data are directly carried out in the main memory 5. The PCM data processed in the main memory 5 is stored in the sound processor 11 and converted to ADPCM data. After this, each of the aforementioned processes are carried out, and sound is output from the speaker 23.

A DVD-ROM drive, CD-ROM drive, hard disk drive, optical disk drive, floppy disk drive, silicon disk drive, a cassette tape reading device, or the like can be employed as the storage medium drive 17. In this case, a DVD-ROM, CD-ROM, hard disk, optical disk, floppy disk, a semiconductor memory, or the like can be employed as the storage medium 300.

The storage medium drive 17 reads out image data, sound data, and program data from the storage medium 300, and supplies this data to the decoder 12. The decoder 12 carries out an error correction process on the data from the storage medium drive 17 by means of ECC (Error Correction Code). Then, the data on which the error correction process was carried out is supplied to the main memory 5 or the sound processor 11.

A card type memory, for example, can be employed as the memory 18. A card type memory is employed, for example, to save various game parameters at the point at which a game was interrupted.

The controller 19 is a control device that a user uses to input a variety of operational commands, and sends operation signals to the CPU 1 in response to operation by a user. The controller 19 is provided with a first button 19a, a second button 19b, a third button 19c, a fourth button 19d, a move up key 19U, a move down key 19D, a move left key 19L, a move right key 19R, an L1 button 19L1, and L2 button 19L2, an R1 button 19R1, an R2 button 19R2, a start button 19e, a select button 19f, a left stick 19SL, and a right stick 19SR.

The move up key 19U, the move down key 19D, the move left key 19L, and the move right key 19R are, for example, used to provide the CPU 1 with commands that make a character and/or a cursor move up, down, left, and right on the screen of the television monitor 21.

The start button 19e is used, for example, to instruct the CPU 1 to load the game program from the storage medium 300. The select button 19f is used, for example, to instruct the CPU 1 to make a variety of selections relating to the game program loaded into the main memory 5 from the storage medium 300.

Except for the left stick 19SL and the right stick 19SR, each button and key on the controller 19 is comprised of an on/off switch that is turned on when it is pressed down from a neutral position by applying a pressing force from the exterior thereof, and turned off when the pressing force is released and the switch returns to its neutral position.

The left switch 19SL and the right switch 19SR are stick type controllers that each have the same general structure as that of a so-called joystick. This stick type controller has a stick that stands upright. This stick is structured so that it has a 360 degree range of motion, and can be tilted forward, backward, left and right from a central erect position. In response to the direction and angle at which they are tilted, the left stick 19SL and the right stick 19SR will send out operation signals to the CPU 1 via the interface circuit 13. The operation signals correspond to x coordinate values in the left/right direction and y coordinate values in the forward/backward direction in which the erect position is the origin.

Note that the first button 19a, second button 19b, third button 19c, fourth button 19d, L1 button 19L1, L2 button 19L2, R1 button 19R1, and R2 button 19R2, are used in various functions of the game program loaded from the storage medium 300.

Next, a summary of how the video game device operates will be provided. If the storage medium 300 is loaded into the storage medium drive 17, when the power switch (not shown in the figures) is turned on and the video game device is supplied with power, the CPU 1 will instruct the storage medium drive 17 to read out the game program from the storage medium 300 based upon the operating system stored in the ROM 6. When this occurs, the storage medium drive 17 will read out the image data, sound data, and program data from the storage medium 300. The image data, sound data, and program data read out therefrom is supplied to the decoder 12, and the decoder 12 carries out an error correction process on each type of data.

The image data on which the decoder 12 has carried out the error correction process is supplied to the expansion circuit 7 via the bus line 2. After the expansion process noted above is carried out by the expansion circuit 7, the image data is supplied to the rendering processor 10, and the rendering processor 10 then reads this data into the non-display area of the buffer 14. The sound data on which the decoder 12 has carried out the error correction process is read into the main memory 5 or the sound processor 11 via the buffer 15. The program data on which the decoder 12 has carried out the error correction process is read into the main memory 5.

After this, the CPU 1 executes the video game based upon the game program stored in the main memory 5 and the instructions issued by a user via the controller 19. In other words, the CPU 1 carries out the appropriate controls for image processing, sound processing, and internal processing, based upon the instructions issued by a user via the controller 19..

Control of the image processing includes, for example, computing the coordinates of each skeleton or computing the polygon vertex coordinate data from the pattern data of each animation that is ordered for the character, supplying three dimensional coordinate data and/or view position data to the graphics data generating processor 3, issuing rendering commands that include the address data and/or brightness data in the display area of the buffer 14 that were obtained by the graphics data generating processor 3.

Control of the sound processing includes, for example, selecting the issue, level, reverb, and the like of the sound output commands for the sound processor 11. Control of the internal processing includes, for example, computations in response to the operation of the controller 19.

Lastly, a description of the video game executed based upon the game program stored in the storage medium 300 will be provided. The video game of the present embodiment has a snowboard theme. A character that is controlled by a user and which is modeled on a snowboarder slides down a course provided in a virtual three dimensional space. An image is displayed in which a large number of snowflakes move within the virtual three dimensional space, and this duplicates a snowfall during a snowboard competition. Thus, by duplicating snowfall during a snowboard competition, the user can experience the feeling of participating in an actual snowboard competition. Note that in the following description, the plurality of objects that move in the virtual three dimensional space are snowflakes.

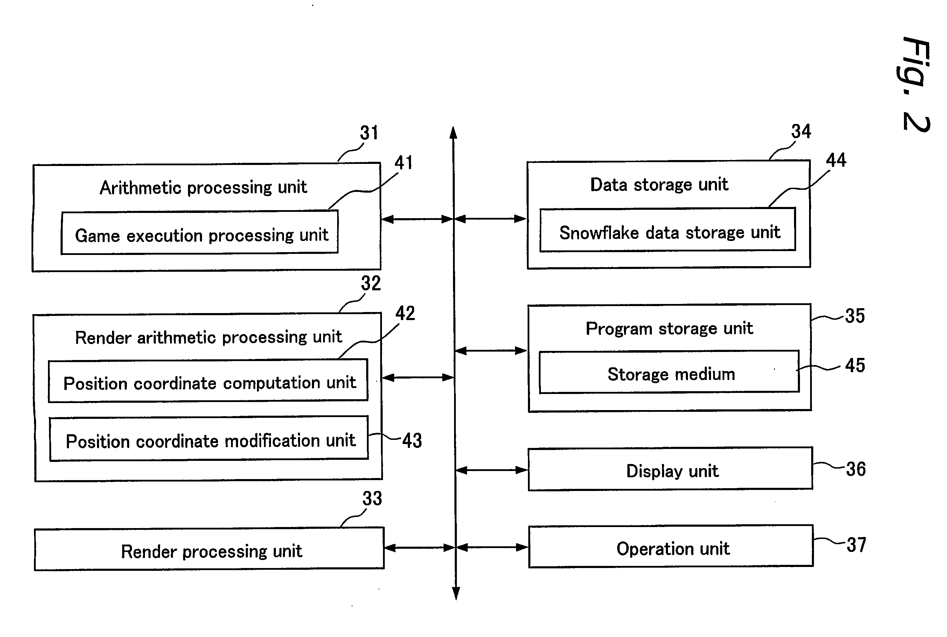

Fig. 2 is a block diagram showing the primary functions of the video game device shown in Fig. 1. As shown in Fig. 2, the video game device functionally includes an arithmetic processing unit 31, a rendering arithmetic processing unit 32, a render processing unit 33, a data storage unit 34, a program storage unit 35, a display unit 36, and an operation unit 37.

The arithmetic processing unit 31 is, for example, effectuated by the CPU 1, and also functions as a game execution processing unit 41 when the CPU 1 executes a three dimensional image processing program stored in the main memory 5.

The game execution processing unit 41 controls the movement of the characters based upon input signals from the controller 19 operated by a user, and carries out a variety of processes relating to the execution of the video game.

The render arithmetic processing unit 32 is, for example, effectuated by the graphics data generating processor 3, and also functions as a position coordinate computation unit 42 and a position coordinate modification unit 43 when the CPU 1 executes a three dimensional image processing program stored in the main memory 5.

The position coordinate computation unit 42 computes the post-movement position coordinates of snowflakes (objects) that are in a virtual three dimensional space. Note that the position coordinates of the snowflakes are expressed by integers.

The position coordinate modification unit 43 modifies the post-movement position coordinates of snowflakes computed by the position coordinate computation unit 42 such that the snowflakes are kept inside a display box, i.e., the display area in which the snowflakes are to be displayed. This display box is rectangular in shape, e.g. cube 1 on a side in the present embodiment. The display box is provided with a virtual camera viewpoint in the center thereof, and this virtual camera viewpoint moves inside the virtual three dimensional space in response to the movement of the character. Note that the length 1 of one side of the display box has a value of the n-th power of 2 for the purpose of bit calculation. If the length 1 of one side of the display box is short, the boundaries of the display box that displays snowflakes and the boundaries of the three dimensional virtual space that does not display snowflakes will be become clear when the view angle of the virtual camera is enlarged, and thus the game screen will have an unharmonious feeling to it. Accordingly, in order to display a game screen that does not have an unharmonious feeling to it, the length 1 of one side of the display box is preferably 1024 bits ($2^n = 2^{10}$).

In addition, the position coordinate modification unit 43 supplies the display box with the position coordinates of the snowflakes by subtracting the length of at least one side of the display box from the post-movement position coordinates of the snowflakes. At this time, a mask process is carried out in the position coordinate modification unit 43, and the low order bit of the post-movement position coordinates of each snowflake is removed.

The render processing unit 33 is effectuated by, for example, the rendering processor 10, and renders the snowflakes inside the display box based upon textures that express snowflakes.

The data storage unit 34 is effectuated by, for example, the main memory 5, and includes a snowflake data storage unit 44.

The snowflake data storage unit 44 stores data relating to the snowflakes, and also stores their initial position coordinates in the virtual three dimensional space, the speed at which the snowflakes move, a plurality of texture types that express snowflakes that have different sizes and shapes, and the like.

The program storage unit 35 is effectuated by, for example, the storage medium drive 17, and has a computer readable storage medium 45 installed therein. The storage medium 45 is effectuated by, for example, the storage medium 300, and stores a three dimensional image processing program as a video game program. In addition, the video game program includes a control program for controlling the movement of the characters, and display data related to the displayed characters and the objects. Note that if the three dimensional image processing program is read out from the storage medium 45 and that program is stored in the main memory, the main memory 5 will function as the program storage unit 35.

The display unit 36 is effectuated by, for example, the television monitor 21. The operation unit 37 is effectuated by, for example, the controller 19.

Note that in the present embodiment, the position coordinate computation unit 42 corresponds to the position coordinate computation means, the position coordinate modification unit 43 corresponds to the position coordinate modification means, the render processing unit 33 corresponds to the render processing means, the snowflake data storage unit 44 corresponds to the texture storage means, the CPU 1 corresponds to the arithmetic processing unit, and the graphics data generating processor 3 corresponds to the render processing unit.

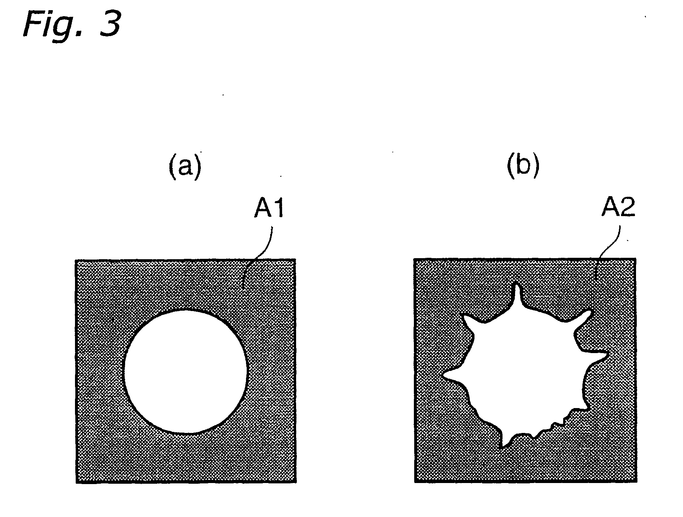

Fig. 3 shows an example of textures used in the present embodiment. Fig. 3 (a) is a texture that expresses a round snowflake A1, and Fig. 3(b) is a texture that expresses an approximately round snowflake A2 in which convex and concave portions are provided around the outer periphery of a round shape. The snowflake A1, A2 are both bitmap images. The snowflake data storage unit 44 can store a plurality of textures in which the shapes of the objects are different, and in the present embodiment, the snowflakes A1 and A2 that have the two different shapes shown in Fig. 3 (a) and 3(b) are stored as texture data. Note that the number of snowflake textures that are stored in the snowflake data storage unit 44 is not limited to the two types noted above, and instead only one type may be stored therein. In addition, textures with other shapes that are different than the two textures noted above may be stored therein, thus allowing three or more types of snowflakes to be expressed. If only one type of snowflake texture is stored therein, the amount of storage area used to store the textures can be reduced. In addition, if three or more types of snowflake textures are stored, a variety of differently shaped snowflakes can be rendered, and this can provide a more realistic snowfall.

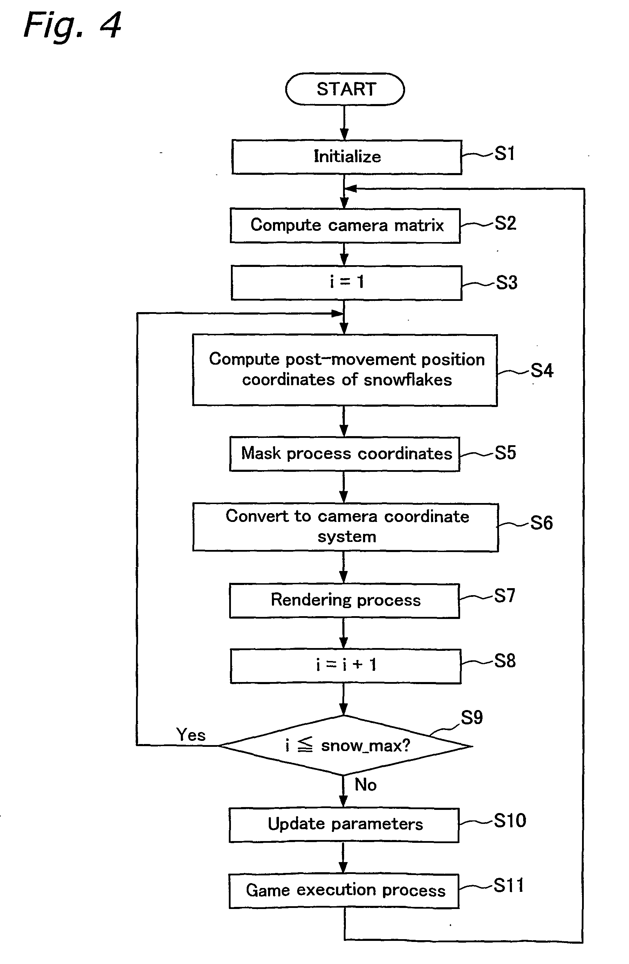

Fig. 4 is a flow chart showing an example of a three dimensional image process used in the video game device shown in Fig. 1. Note that the three dimensional image process shown in Fig. 3 is carried out when the CPU 1 executes the three dimensional image processing program stored in the storage medium 300.

Note that in the variables used in the processes below, snow_max expresses the number of snowflakes displayed, snow[1~snow_max] expresses the snowflake data, and the snowflake data (snow) is comprised of the parameters t(x, y, z), v(x, y, z), size and tex_id. t(x, y, z) expresses the initial position coordinates of the snowflakes inside the virtual three dimensional space, v(x, y, z) expresses the speed at which the snowflakes move, size expresses the size of the snowflakes, and tex_id expresses the type of snowflake texture. v_max(x, y, z) expresses the largest value of the speed at which the snowflakes move, tex_id_max expresses the largest value of the types of textures, and size_max expresses the largest value of the size of the snowflakes. tex_bitmap[1~tex_id_max] expresses a bitmap image. cam(x, y, z) expresses the position coordinates of a virtual camera, and look(x, y, z) expresses the coordinates for pointing the virtual camera on the target. cam_mtx expresses a 4x4 camera matrix for converting from the world coordinate system to a camera coordinate system seen from the viewpoint of the virtual camera. pow(x, y, z) expresses external forces such as wind strength, and pow_total(x, y, z) expresses the integrated value of the external forces. field_length(x, y, z) expresses the length of one side of the display box. Here, x, y, and z are each expressed as factors of 2. field_length_mask(x, y, z) is the bit mask value for removing the low order bit, and field_length_mask(x, y, z) = field_length(x, y, z)-1.

In Step S1, the CPU 1 will initialize the snowflakes. Specifically, a random number between 0 and [field_length (x, y, z)-1] is assigned to snow[1~snow_max].t(x, y, z), a random number between -v_max(x, z) to v_max(x, z) is assigned to snow[1~snow_max].v(x, z), a random number between 1 and v_max(y) is assigned to snow[1~snow_max].v(y), a random number between 1 and sizc_max is assigned to snow[1~snow_max].size, and a random number between 1 and tex_id_max is assigned to snow[1~snow_max].tex_id. Furthermore, an initial value for an external force such as wind strength and the like that was set when the game was started is assigned to pow(x, y, z), the value 0 is assigned to pow_total(x, y, z), and the value 0 is assigned to clock.

In Step S2, the CPU 1 computes the camera matrix cam_mtx in order to convert from a world coordinate system to a camera coordinate system. The world coordinate system is the coordinate system in which an object is positioned inside a three dimensional space. The camera coordinate system is a coordinate system which is set up such that the viewpoint of the virtual camera is the origin and the viewing direction thereof is along the z axis. When attempting to display an object in a virtual three dimensional space, the coordinates thereof must be converted from the world coordinate system to the camera coordinate system. Thus a camera matrix cam_mtx will be computed in order to convert from the world coordinate system to the camera coordinate system. The camera matrix cam_mtx is computed from the position coordinates cam(x, y, z) of the virtual camera and the coordinates look(x, y, z) for pointing the virtual camera on the target. Note that the computational routine that computes the camera matrix can_mtx is computed by employing the preexisting library in the video game device.

In Step S3, the CPU 1 assigns the value 1 to a loop counter i. In Step S4, the graphics data generating processor 3 computes the post-movement position coordinates of the snowflakes. In other words, the graphics data generating processor 3 computes new post-movement position coordinates for the snowflakes t'(x, y, z) by adding the snowflake movement (the speed at which the snowflakes move snow[i].v(x, y, z) multiplied by time clock) and the external forces pow_total(x, y, z) to the initial position coordinates of the snowflakes snow[i].t(x, y, z). The method of computing the new position coordinates of the snowflakes after movement t'(x, y, z) is expressed by the following formula (1).

$$t'(x, \quad y, \quad z) = snow[i].t(x, \quad y, \quad z) + snow[i].v(x, \quad y, \quad z) \times clock +$$

$$pow\_total(x, \quad y, \quad z) \cdot \cdot \cdot \cdot (1)$$

Note that t'(x, y, z) in the aforementioned formula (1) is a temporary process used for computational purposes, and is stored in the main memory 5.

In Step S5, the graphics data generating processor 3 mask processes the position coordinates t'(x, y, z) such that the post-movement position coordinates of the snowflakes t'(x, y, z) are kept inside the display box of the virtual camera. This mask process is expressed by the following formula (2).

$$t'(x, \quad y, \quad z) = \{(t'(x, \quad y, \quad z) - cam(x, \quad y, \quad z)) \ AND \ field\_length\_mask(x, \quad y,$$

$$z)\} - (field\_length(x, \quad y, \quad z) / 2) \quad \cdot \cdot \cdot \cdot (2)$$

Note that the AND in the aforementioned formula (2) is a bit operator that expresses the conjunction between t'(x, y, z) - cam(x, y, z) and field_length_mask(x, y, z).

Thus, the post-movement position coordinates of the snowflakes are mask processed by obtaining the conjunction between a value computed by subtracting the camera coordinates that express the view position of the virtual camera from the post-movement position coordinates of the snowflakes in a virtual three dimensional space, and the length of one side of the display box in which the value 1 has been subtracted therefrom for mask processing. When this occurs, only the low order bit of the position coordinates of each snowflake can be obtained. In addition, snowflakes that go out from the display box can be returned to the inside of the display box, and thus a fixed number of snowflakes can always be displayed.

In Step S6, the graphics data generating processor 3 converts the post-movement position coordinates of the snowflakes t'(x, y, z) from the world coordinate system to the camera coordinate system. In other words, the graphics data generating processor 3 conducts a rotation only coordinate conversion of the post-movement position coordinates of the snowflakes with the camera matrix cam_mtx. This coordinate conversion is carried out by obtaining the inner product of the post-movement position coordinates of the snowflakes t'(x, y, z) and the camera matrix can_mtx, and is expressed by means of the following formula (3).

$$t'(x, \quad y, \quad z) = t'(x, \quad y, \quad z) \cdot cam\_mtx \cdot \cdot \cdot \cdot (3)$$

Note that the ". "in the aforementioned formula (3) is an operator that expresses the inner product.

In Step S7, the graphics data generating processor 3 will carry out the snowflake rendering process. This rendering process is carried out by reading the texture data expressed by snow[i].tex_id from the main memory 5 and registering it in the rendering processor 10, and then simultaneously registering both the upper left edge coordinate and the lower right edge coordinate on sprite display coordinate system in the rendering processor 10. Here, the upper left edge sprite display coordinates are expressed by t'(x, y, z) - snow[i].size, and the lower right edge sprite display coordinates are expressed by t'(x, y, z) + snow[i].size. The rendering processor 10 writes both the texture data and the upper left edge sprite display coordinates and lower right edge display coordinates to the display area of the buffer 14. In this way, snowflakes are displayed on the display screen of the television monitor 21.

In Step S8, the CPU 1 will increment the loop counter i upward by 1.

In Step S9, the CPU 1 will determine whether or not the loop counter i is less than snow_max. In other words, all of the snowflakes will be rendered by repeating the processes of Steps S4 to Step S8 for only the number of times that equals snow_max i.e., the number of snowflakes. Here, if the loop counter i is determined to be less than snow_max (Step S9 is yes), the process will return to Step S4 because there are snowflakes that have yet to be rendered, and if the loop counter is determined to be greater than snow_max (Step S9 is no), the process moves to Step S10 because all snowflakes have been rendered.

In Step S 10, the CPU 1 will update the snowflake parameters. Here, the updated parameters are the virtual camera position coordinates cam(x, y, z), the coordinates look(x, y, z) for pointing the virtual camera on the target, the external force pow(x, y, z) and the time clock. The virtual camera position coordinates cam(x, y, z) and the coordinates look(x, y, z) for pointing the virtual camera on the target are updated with the respective post-movement coordinates in response to movement of the virtual camera. The external force pow(x, y, z) is reset if the wind direction changes. The time clock is set as clock=clock + 1 in order to advance the time.

In Step S11, the CPU 1 will carry out the game execution process. The game execution process is not related to the rendering of the snowflakes, e.g., it carries out the process of moving a character in response to input signals from the controller 19. Then, after the game execution process has been carried out, the process returns to Step S2.

In the three dimensional image processing flowchart shown in Fig. 4, the processes from Step S3 to Step S7 are conducted by a render processing unit (the graphics data generating processor 3 in the present embodiment). In addition, the other processes of Step S1, Step S2 and from Step S8 to S11 are carried out by a arithmetic processing unit that is capable of executing a variety of processes including switch processing (the CPU 1 of the present embodiment). In the prior art three dimensional image process shown in the flowchart of Fig. 6, other than the process of Step S108, the main processes from Step S101 1 to S 112 are carried out by the arithmetic processing unit. In particular, a relatively long period of time will elapse before the arithmetic processing unit engages in the rendering process due to the complex computations of the switch processing shown in Step S106, and these computations increase the burden on the arithmetic processing unit On the other hand, in the three dimensional image process according to the present invention, the main processes can be carried out by the render processing unit because the complex computations of the switch processing that take place at Step S 1 06 are not performed. In this way, the burden on the arithmetic processing unit can be reduced. Even if the render processing unit cannot carry out complex arithmetic processes such as the switch processing, it can carry out arithmetical processes faster than the arithmetic processing device. Because of this, the time needed to carry out the arithmetical processes will be shorter than that of the prior art three dimensional image process because the render processing unit bears the burden of the main processing. Thus, when duplicating snowfall by means of a three dimensional image process, the snowflakes can be rendered quicker than when the arithmetic processing unit bears the burden of the main processes to render the snowflakes. In addition, a large number of snowflakes can be rendered by reducing the burden on the arithmetic processing unit.

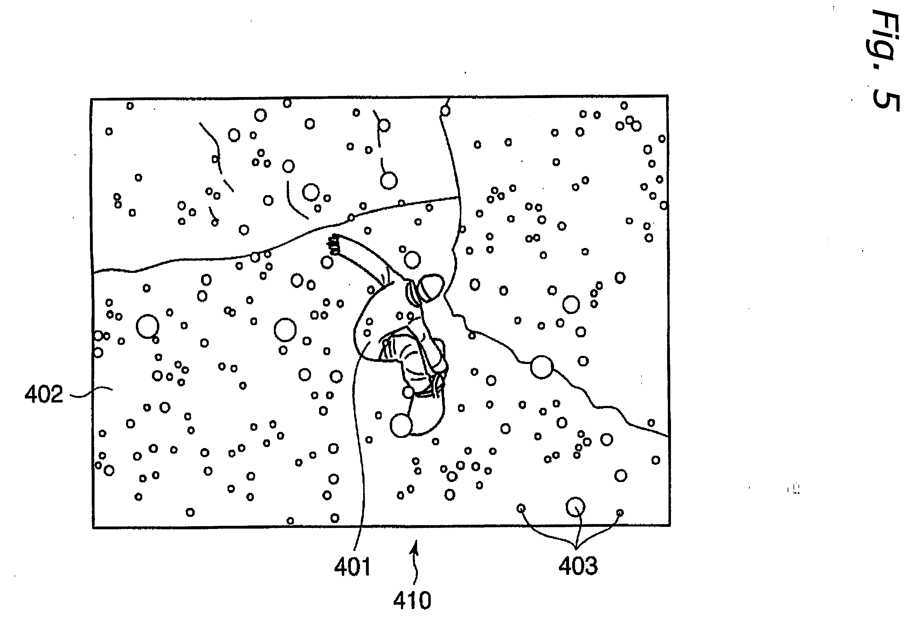

Fig. 5 shows an example of a game screen in which snowflakes rendered by the three dimensional image process of the present embodiment are displayed. The game screen 410 shown in Fig. 5 displays a character 401 that is modeled on a snowboarder and is manipulated by a user, a course 402 on which the character 401 is sliding down, and snowflakes 403. As shown in Fig. 5, when the snowflakes are rendered by the three dimensional image process of the present embodiment, the burden on the CPU 1 is reduced, and a large number of snowflakes can be displayed, because the primary computations are carried out by a graphics data generating processor 3 that has the ability to carry out arithmetic processing faster than the CPU 1. Because of this, an environment can be duplicated in which a large quantity of snow is falling during a snowboard competition, and thus a user can enjoy the video game while experiencing a sufficient amount of realism.

Next, the burden on the arithmetic processing unit (CPU 1) and the render processing unit (the graphics data generating processor 3) in the three dimensional image process of the present embodiment (shown in the flowchart of Fig. 4) will be compared to the burden on the arithmetic processing unit and the render processing unit in the prior art three dimensional image process (shown in the flowchart of Fig. 6) when duplicating snowfall. Here, snow_max =10000, and the burden on the arithmetic processing unit and the render processing unit when 10000 snowflakes are rendered will be compared in the three dimensional image process of the present embodiment and the prior art three dimensional image process. When 10000 snowflakes are rendered by the three dimensional image process of the present embodiment, the burden on the arithmetic processing unit was less than 1%, and the burden on the render processing unit was 7%. When 10000 snowflakes were rendered by the prior art three dimensional image process, the burden on the arithmetic processing unit was 70%, and the burden on the render processing unit was 4%. Normally, the burden on the arithmetic processing unit is ideally 10% or less. When these facts are taken into consideration, it is clear that carrying out the complex arithmetic processing of the prior art three dimensional process with the arithmetic processing unit, such as switch processing, place a 70% burden on the arithmetic processing unit, and that this is a large burden to bear even for an arithmetic processing unit.

On the other hand, by carrying out the main arithmetic processes of the three dimensional image process of the present embodiment with the render processing unit, the burden on the arithmetic processing unit will be reduced by 69% when compared to the burden placed on the prior art arithmetic processing unit. In addition, regardless if the main arithmetic processes are carried out with the render processing unit, the burden on the render processing unit will increase only 3% when compared to the burden on the prior art render processing unit. Because of this, it is clear that the three dimensional image process of the present embodiment is more efficient and can reduce the burden on the arithmetic processing unit when compared to the prior art three dimensional image process.

Note that in the present embodiment, the position coordinates of the snowflakes use integers for bit computation. However, the present invention is not particularly limited thereto, and floating point values may be used in the position coordinates of the snowflakes. The process in which floating point values are used in the position coordinates of the snowflakes will be described. When floating point values are used in the position coordinates of the snowflakes, the formula (2) used in the process of Step S5 in the flowchart shown in Fig. 4 is replaced with the following formula (3a).

$$t'(x, y, z) = \{(t'(x, y, z) - cam(x, y, z)) \text{ MOD field\_length}(x, y, z)\} -$$

$$(\text{field\_length}(x, y, z) / 2) \cdot \cdot \cdot \cdot (3a)$$

Note that the MOD in the aforementioned formula (3a) is a remainder operator that expresses the value of the remainder after division. For example, if $x = a \text{ MOD } b$, then the value of x is the remainder of the division of a by b.

If the aforementioned formula (3a) is used in the process of Step S5 in the flowchart shown in Fig. 4, snowflakes can be kept inside the display box even if floating point values are used in the position coordinates of the snowflakes. It is not necessary for the value of x, y, and z in field_length(x, y, z) to be the n-th power of 2, and floating point values may be used. In addition, ficld_length_mask(x, y, z) becomes unnecessary. However, if floating point values are used, there is a possibility that the computational speed will be lower than the bit computation because division is being carried out.

In the present embodiment, the snowflake data snow[1~ snow_max] is comprised of the parameters of the initial position coordinates t(x, y, z), movement speed v(x, y, z), snowflake size size, and texture type tex_id. However, the present invention is not particularly limited thereto, and other parameters may be used. For example, snowflake size in the horizontal and vertical directions size_x, size_y, the rotational speed of the snowflakes rot_speed, and data relating to the color of the snowflakes r, g, b, and the like may also be used as the parameters of the snowflake data snow[1 to snow_max]. When this occurs, these parameters are assigned appropriate random numbers in Step S 1 of the flowchart shown in Fig. 4, and are used in the process of Step S7.

Variables expressed in size_x, size_y can be used when the vertical and horizontal sizes of the snowflakes change. In Step S7 of the flowchart shown in Fig. 4, the coordinate x of the upper left edge on the sprite display coordinate system is expressed by x = t'(x) - snow[i].size_x, the coordinate y of the upper left edge is expressed by y = t'(y) - snow [i].size_y, the coordinate x of the lower right edge is expressed by x = t'(x) + snow[i].size_x, and the coordinate y of the lower right edge is expressed by y = t'(y) + snow[i].size_y. Thus, by setting the coordinates x, y of upper left edge and lower right edge on the sprite display coordinate system, a bitmap image of a round snowflake like that shown in Fig. 3 (a) can be transformed to a variety of shapes. For example, an elliptically shaped snowflake can be rendered.

Variables that are expressed in rot_speed can be used when duplicating the rotation of snowflakes. In Step S7 of the flowchart shown in Fig. 4, the graphics data generating processor 3 can compute a rotation value rotate in the time clock by using the following formula (4).

$$\text{rotate} = \text{rot\_speed} \times \text{clock} \cdot \cdot \cdot \cdot (4)$$

Thus, an image of snowflakes rotating and falling can be expressed by rotating and rendering bitmap images of snowflakes with only the rotation value rotate.

Variables expressed in r, g, and b can be used when changing the colors of the snowflakes. r expresses the R (red) component parameter, g expresses the G (green) component parameter, and b expresses the B (blue) component parameter. In Step S7 of the flowchart shown in Fig. 4, the graphics data generating processor 3 changes the color of the snowflake texture data and renders them by adding or subtracting the component expressed in the variables of r, g, and b to the texture data. Thus, snowflakes having a variety of colors can be expressed by changing and rendering the color of the snowflake texture data, thereby making it possible for red snow, blue snow, black snow, and the like to fall.

In addition, the objects were described as snowflakes in the present embodiment, but the present invention is not particularly limited thereto. For example, the objects may be rain drops. In this situation, a bitmap image that expresses a rain drop is stored as texture data, and rainfall can be duplicated by making the speed at which the rain drops move v(x, y, z) faster than the speed at which the snowflakes move. In addition, a sand storm can be duplicated by making the objects into grains of sand. Furthermore, an environment in which dust is flying about can be duplicated by making the objects into dust particles.

In addition, in the present embodiment, the processes of Step S3 to Step S7 in the flowchart of the three dimensional image process shown in Fig. 4 are carried out by a render processing unit (the graphics data generating processor 3 in the present embodiment). However, the present invention is not particularly limited thereto, and the processes of Step S3 to Step S7 in the flowchart of the three dimensional image process shown in Fig. 4 may be carried out by the arithmetic processing unit (the CPU 1 in the present embodiment). In this situation, the burden on the arithmetic processing unit will increase, but the processing time can be shortened when compared to the prior art three dimensional image process because switch processing is not performed.

In addition, in the present embodiment, the video game described has a snowboard theme, but the present invention is not limited thereto. For example, the present invention can be applied to video games that have outdoor sports themes, such as skiing, baseball, soccer, and the like, and can also be applied to other video games such as action games, simulation games, shooting games, role playing games, and combat games.

Industrial Applicability

According to the invention disclosed in claim 1, the initial parameters of the objects are first set, the post-movement position coordinates of the objects in a virtual three dimensional space are computed, and the post-movement position coordinates of the objects computed thereby are modified such that the post-movement position coordinates are kept inside a display area in which the objects are displayed. At this time, because it is not necessary to perform a switch process in order to determine whether or not the post-movement position coordinates of the objects are in the display area, the burden on the arithmetic processing unit can be reduced and a large number of objects can be rendered when, for example, the video game device comprises a general purpose arithmetic processing unit that is capable of executing a variety of processes including switch processing.

According to the invention disclosed in claim 2, the post-movement position coordinates of objects that are outside the display area can be returned to inside the display area by subtracting the length of at least one side of the rectangular display area in which objects can be displayed from the post-movement position coordinates of the objects. Thus, the objects can be supplied inside the display area without using switch processing to determine whether or not the position coordinates of the objects are inside the display area.

According to the invention disclosed in claim 3, bit computation can be used to compute the post-movement position coordinates of the objects because the position coordinates of the objects are expressed in integers, and the computational speed can be increased compared to when floating point values are used in the position coordinates of the objects. In addition, by mask processing the post-movement position coordinates of the objects only the low order bit will be removed, and thus it becomes unnecessary to perform switch processing to determine whether or not the position coordinates of the objects are in the display area because the length of at least one side of the rectangular display area is subtracted from the post-movement position coordinates of the objects. Thus, the objects can be supplied in the display area with a simple arithmetic process.

According to the invention disclosed in Fig. 4, because the objects are rendered based upon textures stored in the texture storage means, a variety of objects can be expressed, and the video game can be diversified, by storing a plurality of textures having different shapes therein.

According to the invention disclosed in Fig. 5, by rendering objects with textures that express snow, snowfall can be duplicated in a video game. If a plurality of snow textures having different shapes are stored, a variety of snow shapes can be expressed by changing these textures. In addition, the user will have an improved feeling of reality because a great variety of snowfalls can be duplicated by performing the same process for each type of snow.

According to the invention disclosed in claim 6, the arithmetic processing unit is capable of executing a variety of processes including switch processing. The render processing unit is not provided with a complex arithmetic processing function for switch processing and the like, but instead has only a simple arithmetic processing function so that it can conduct arithmetic processing at high speeds. Here, switch processing is not involved in the process of computing the post-movement position coordinates of objects in a virtual three dimensional space, nor in the process of modifying the post-movement position coordinates of objects computed thereby such that they are kept inside the display area in which the objects are displayed. Thus, the burden on the arithmetic processing unit can be reduced by executing both the process which computes the position coordinates and the process which modifies the position coordinates by means of a render processing unit that can perform computations faster than an arithmetic processing unit that cannot perform switch processing, rather than with an arithmetic processing unit that can perform switch processing.

According to the invention disclosed in claim 7, the initial parameters of the objects are first set, the post-movement position coordinates of the objects in a virtual three dimensional space are computed, and the post-movement position coordinates of the objects computed thereby are modified such that the post-movement position coordinates are kept inside a display area in which the objects are displayed. At this time, because it is not necessary to perform switch processing in order to determine whether or not the post-movement position coordinates of the objects are in the display area, the burden on the arithmetic processing unit can be reduced and a large number of objects can be rendered when, for example, the video game device comprises a general purpose arithmetic processing unit that is capable of executing a variety of processes including switch processing.

According to the invention disclosed in claim 8, the initial parameters of the objects are first set, the post-movement position coordinates of the objects in a virtual three dimensional space are computed, and the post-movement position coordinates of the objects computed thereby are modified such that the post-movement position coordinates are kept inside a display area in which the objects are displayed. At this time, because it is not necessary to perform switch processing in order to determine whether or not the post-movement position coordinates of the objects are in the display area, the burden on the arithmetic processing unit can be reduced and a large number of objects can be rendered when, for example, the video game device comprises a general purpose arithmetic processing unit that is capable of executing a variety of processes including a switch process.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims.

**Claims**

1. A three dimensional image processing program for rendering a plurality of objects that move in a virtual three dimensional space and which controls a video game device (100), comprising:

   position coordinate computation means (42) that computes post-movement position coordinate of the objects in a virtual three dimensional space;
   position coordinate modification means (43) that modifies the post-movement position coordinate of the objects that are outside of a display area in which the objects will be displayed such that the post-movement position coordinates are kept within the display area; and
   rendering means (33) that renders the objects within the display area,

   **characterized in that** the position coordinate modification means (43) is arranged to modify the post-movement position coordinates of the objects that are outside of the display area in which the objects will be displayed such that the post-movement position coordinates are kept within the display area by carrying out a mask process to acquire the low order bits of the post-movement position coordinates based on a conjunction between the post-movement position coordinates defined in integers of the objects that are inside and outside of the display area, and a length of a side of the display area, which has a value of the nth power of 2 and from which the value 1 has been subtracted and by modifying the post-movement position coordinate involved in the mask process depending on the position of the origin of a relative coordinate system for the objects.

2. The three dimensional image processing program set forth in claim 1, wherein the display area is defined as a rectangular area in the virtual three dimensional space.

3. A three dimensional image processing method for rendering a plurality of objects that move in a virtual three dimensional space, comprising the steps of:

   a position coordinate computation step in which a video game device (100) computes post-movement position coordinates of the objects in a virtual three dimensional space;
   a position coordinate modification step in which the video game device (100) modifies the post-movement position coordinates of the objects that are outside of a display area in which the objects will be displayed such that the post-movement position coordinates are kept within the display area; and

a rendering step in which the video game (100) device renders the objects within the display area,

**characterized in that** the position coordinate modification step (43) modifies the post-movement position coordinates of the objects that are outside of the display area in which the objects will be displayed such that the post-movement position coordinates are kept within the display area by carrying out a mask process to acquire the low order bits of the post-movement position coordinates based on a conjunction between the post-movement position coordinates defined in integers of the objects that are inside and outside of the display area, and a length of a side of the display area, which has a value of the nth power of 2 and from which the value 1 has been subtracted, and by modifying the post-movement position coordinate involved in the mask process depending on the position of the origin of a relative coordinate system for the objects.

4.  A video game device for rendering a plurality of objects that move in a virtual three dimensional space, comprising:

   position coordinate computation means (42) that computes post-movement position coordinates of the objects in a virtual three dimensional space;
   position coordinate modification means (43) that modifies the post-movement position coordinates of the objects that are outside of a display area in which the objects will be displayed such that the post-movement position coordinates are kept within the display area in which the objects will be displayed; and
   rendering means (33) that renders the objects within the display area,

   **characterized in that** the position coordinate modification means (43) is arranged to modify the post-movement position coordinates of the objects that are outside of the display area in which the objects will be displayed such that the post-movement position coordinates are kept within the display area by carrying out a mask process to acquire the low order bits of the post-movement position coordinates based on a conjunction between the post-movement position coordinates defined in integers of the objects that are inside and outside of the display area, and a length of a side of the display area, which has a value of the nth power of 2 and from which the value 1 has been subtracted, and by modifying the post-movement position coordinate involved in the mask process depending on the position of the origin of a relative coordinate system for the objects.

5.  The video game device set forth in claim 4, wherein the video game device (100) further functions as a texture storage means (34) that stores a plurality of texture data that express different shapes; and
   the rendering means (33) renders the objects based upon the texture data stored in the texture storage means (34).

6.  The video game device set forth in claim 5, wherein the plurality of texture data include texture data that express snow.

7.  The video game device set forth in any of claim 4 to 6, wherein the video game device (100) comprises an arithmetic processing unit (31) that can execute a variety of processes including switch processing, and a render processing unit (32) that is provided exclusively for render processing; and
   the render processing unit (32) functions as the position coordinate computation means (42) and the position coordinate modification means (43).

**Patentansprüche**

1.  Programm zur dreidimensionalen Bildverarbeitung zur Wiedergabe einer Vielzahl von Objekten, die sich in einem virtuellen dreidimensionalen Raum bewegen und welches ein Videospiel (100) steuert, welches folgendes aufweist:

   Positionskoordinaten-Berechnungsmittel (42), welches Bewegungsabschluss-Positionskoordinaten von den Objekten in einem virtuellen dreidimensionalen Raum berechnet;
   Positionskoordinaten-Modifizierungsmittel (43), welches die Bewegungsabschluss-Positionskoordinaten der Objekte modifiziert, welche sich außerhalb eines Anzeigebereiches befinden, indem die Objekte derart angezeigt werden, dass die Bewegungsabschluss-Positionskoordinaten innerhalb des Anzeigebereiches gehalten werden; und
   Wiedergabemittel (33), welche die Objekte innerhalb des Anzeigebereiches wiedergeben,

   **dadurch gekennzeichnet, dass** das Positionskoordinaten-Modifizierungsmittel (43) derart gestaltet ist, um die Bewegungsabschluss-Positionskoordinaten der Objekte zu modifizieren, welche sich außerhalb des Anzeigebereiches befinden, in welchem die Objekte derart angezeigt werden, dass die Bewegungsabschluss-Positionskoordinaten innerhalb des Anzeigebereiches gehalten werden indem ein Maskierungsprozess, ausgeführt wird, um die Bits niedriger Ordnung der Bewegungsabschluss-Positionskoordinaten zu erhalten, basierend auf einer Verknüpfung zwischen den Bewegungsabschluss-Positionskoordinaten, die für die Objekte ganzzahlig bestimmt sind, die innerhalb und außerhalb des Anzeigebereiches vorliegen, sowie einer Länge einer Seite des Anzeigebereiches, welche einen Wert der n-ten Energie von 2 aufweist und wovon der Wert 1 abgezogen worden ist, und durch Modifizierung der Bewegungsabschluss-Positionskoordinaten, die in dem Maskenprozesses mit einbezogen sind, in Abhängigkeit von der Position des ursprünglichen relativen Koordinatensystems für die Objekte.

2. Programm zur dreidimensionalen Bildverarbeitung nach Anspruch 1, worin der Anzeigebereich bestimmt ist als ein rechtwinkeliger Bereich in einem virtuellen dreidimensionalen Raum.

3. Verfahren zur dreidimensionalen Bildverarbeitung zur Wiedergabe einer Vielzahl von Objekten, welche sich in einem virtuellen dreidimensionalen Raum bewegen, umfassend folgende Schritte:

> einen Positionskoordinaten-Berechnungsschritt, in welchem ein Videospiel (100) Bewegungsabschluss-Positionskoordinaten der Objekte in einem virtuellen dreidimensionalen Raum berechnet;
> einen Positionskoordinaten-Modifizierungsschritt, in welchem das Videospiel (100) die Bewegungsabschluss-Positionskoordinaten der Objekte modifiziert, welche sich außerhalb eines Anzeigebereiches befinden, in welchem die Objekte derart angezeigt werden, dass die Bewegungsabschluss-Positionskoordinaten innerhalb des Anzeigebereiches gehalten werden; und
> einen Wiedergabeschritt, in welchem das Videospiel (100) die Objekte innerhalb des Anzeigebereiches wiedergibt,

**dadurch gekennzeichnet, dass** der Positionskoordinaten-Modifizierungsschritt (43) die Bewegungsabschluss-Positionskoordinaten der Objekte modifiziert, die sich außerhalb des Anzeigebereiches befinden, in dem die Objekte derart angezeigt werden, dass die Bewegungsabschluss-Positionskoordinaten innerhalb des Anzeigebereiches gehalten werden durch Ausführung eines Maskenprozesses, um die Bits niederer Ordnung der Bewegungsabschluss-Positionskoordinaten zu erhalten, basierend auf einer Verknüpfung zwischen den Bewegungsabschluss-Positionskoordinaten, die für die Objekte ganzzahlig bestimmt sind, die innerhalb und außerhalb des Anzeigebereiches vorliegen, sowie einer Länge einer Seite des Anzeigebereiches, welche einen Wert der n-ten Energie von 2 aufweist und wovon der Wert 1 abgezogen worden ist, und durch Modifizierung der Bewegungsabschluss-Positionskoordinaten, die in dem Maskenprozesses mit einbezogen sind, in Abhängigkeit von der Position des ursprünglichen relativen Koordinatensystems für die Objekte.

4. Videospiel zur Wiedergabe einer Vielzahl von Objekten, die sich in einem virtuellen dreidimensionalen Raum bewegen, welches folgendes aufweist:

> Positionskoordinaten-Berechnungsmittel (42), welches Bewegungsabschluss-Positionskoordinaten der Objekte in einem virtuellen dreidimensionalen Raum berechnet;
> Positionskoordinaten-Modifizierungsmittel (43), welches die Bewegungsabschluss-Positionskoordinaten der Objekte modifiziert, welche außerhalb eines Anzeigebereiches liegen, in welchem die Objekte derart angezeigt werden, dass die Bewegungsabschluss-Positionskoordinaten innerhalb des Anzeigebereiches gehalten werden, in welchem die Objekte angezeigt werden; und
> Wiedergabemittel (33), welches die Objekte innerhalb des Anzeigebereiches wiedergibt,

**dadurch gekennzeichnet, dass** das Positionskoordinaten-Modifizierungsmittel (43) derart angeordnet ist, um die Bewegungsabschluss-Positionskoordinaten der Objekte zu modifizieren, welche sich außerhalb des Anzeigebereiches befinden, in welchem die Objekte derart angezeigt werden, dass die Bewegungsabschluss-Positionskoordinaten innerhalb des Anzeigebereiches gehalten werden, indem ein Maskenprozess ausgeführt wird, um die Bits niederer Ordnung der Bewegungsabschluss-Positionskoordinaten zu erhalten, basierend auf einer Verknüpfung zwischen den Bewegungsabschluss-Positionskoordinaten, die für die Objekte ganzzahlig bestimmt sind, die innerhalb und außerhalb des Anzeigebereiches vorliegen, sowie einer Länge einer Seite des Anzeigebereiches, welche einen Wert der n-ten Energie von 2 aufweist und wovon der Wert 1 abgezogen worden ist, und durch Modifizierung der Bewegungsabschluss-Positionskoordinaten, die in dem Maskenprozesses mit einbezogen sind, in Abhängigkeit von der Position des ursprünglichen relativen Koordinatensystems für die Objekte.

**5.** Videospiel nach Anspruch 4, worin das Videospiel (100) weiterhin die Funktionen als strukturiertes Speichermittel (34) aufweist, welches eine Vielzahl von Strukturdaten speichert, die unterschiedliche Formen ausdrücken; und wobei das Wiedergabemittel (33) die Objekte wiedergibt, basierend auf den Strukturdaten, gespeichert in dem Strukturspeichermittel (34).

**6.** Videospiel nach Anspruch 5, worin die Vielzahl von Strukturdaten solche beinhaltet, die Schnee ausdrücken.

**7.** Videospiel nach einem der Ansprüche 4-6, worin das Videospiel (100) eine arithmetische Bearbeitungseinheit (31) umfasst, welche verschiedene Prozesse ausführen kann einschließlich von Schaltprozessen und eine Wiedergabebearbeitungseinheit (32), welche exklusiv zur Wiedergabebearbeitung vorhanden ist; und die Wiedergabebearbeitungseinheit (32) als das Positionskoordinaten-Berechnungsmittel (42) und als das Positionskoordinaten-Modifizierungsmittel (43) dient.

**Revendications**

**1.** Programme de traitement d'images en trois dimensions pour réaliser le rendu d'une pluralité d'objets qui se déplacent dans un espace virtuel à trois dimensions et qui commande un dispositif de jeu vidéo (100), comprenant :

des moyens de calcul de coordonnées de position (42) qui calculent des coordonnées de position après mouvement des objets dans un espace virtuel à trois dimensions ;
des moyens de modification de coordonnées de position (43) qui modifient les coordonnées de position après mouvement des objets qui sont en dehors d'une zone d'affichage dans laquelle les objets vont être affichés de sorte que les coordonnées de position après mouvement sont maintenues dans la zone d'affichage ; et
des moyens de rendu (33) qui effectuent le rendu des objets dans la zone d'affichage,

**caractérisé en ce que** les moyens de modification de coordonnées de position (43) sont agencés pour modifier les coordonnées de position après mouvement des objets qui sont en dehors de la zone d'affichage dans laquelle les objets vont être affichés, de sorte que les coordonnées de position après mouvement sont maintenues dans la zone d'affichage en réalisant un processus de masquage pour acquérir les bits d'ordre inférieur des coordonnées de position après mouvement sur la base d'une conjonction entre les coordonnées de position après mouvement définies dans des entiers des objets qui sont à l'intérieur et à l'extérieur de la zone d'affichage, et une longueur d'un côté de la zone d'affichage qui a une valeur égale à une puissance n de 2 et de laquelle la valeur 1 a été soustraite, et en modifiant les coordonnées de position après mouvement impliquées dans le processus de masquage en fonction de la position de l'origine d'un système de coordonnées relatives pour les objets.

**2.** Programme de traitement d'images en trois dimensions selon la revendication 1, dans lequel la zone d'affichage est définie comme étant une zone rectangulaire dans l'espace virtuel à trois dimensions.

**3.** Procédé de traitement d'images en trois dimensions pour effectuer le rendu d'une pluralité d'objets qui se déplacent dans un espace virtuel à trois dimensions, comprenant les étapes suivantes :

une étape de calcul de coordonnées de position dans laquelle un dispositif de jeu vidéo (100) calcule des coordonnées de position après mouvement des objets dans un espace virtuel à trois dimensions ;
une étape de modification de coordonnées de position dans laquelle le dispositif de jeu vidéo (100) modifie les coordonnées de position après mouvement des objets qui sont à l'extérieur d'une zone d'affichage dans laquelle les objets vont être affichés de sorte que les coordonnées de position après mouvement sont maintenues dans la zone d'affichage ; et
une étape de rendu dans laquelle le dispositif de jeu vidéo (100) effectue le rendu des objets dans la zone d'affichage,

**caractérisée en ce que** l'étape de modification de coordonnées de position (43) modifie les coordonnées de position après mouvement des objets qui sont à l'extérieur de la zone d'affichage dans laquelle les objets vont être affichés de sorte que les coordonnées de position après mouvement sont maintenues dans la zone d'affichage en effectuant un traitement de masquage pour acquérir les bits d'ordre inférieur des coordonnées de position après mouvement sur la base d'une conjonction entre les coordonnées de position après mouvement définies dans des entiers des objets qui sont à l'intérieur et à l'extérieur de la zone d'affichage, et une longueur d'un côté de la zone d'affichage, qui a une valeur égale à une puissance n de 2 et de laquelle la valeur 1 a été soustraite, et en modifiant les coordonnées de position après mouvement impliquées dans le processus de masquage en fonction de la position de l'origine d'un système de coordonnées relatives pour les objets.

4. Dispositif de jeu vidéo pour effectuer le rendu d'une pluralité d'objets qui se déplacent dans un espace virtuel à trois dimensions, comprenant :

des moyens de calcul de coordonnées de position (42) qui calculent des coordonnées de position après mouvement des objets dans un espace virtuel à trois dimensions ;
des moyens de modification de coordonnées de position (43) qui modifient les coordonnées de position après mouvement des objets qui sont à l'extérieur d'une zone d'affichage dans laquelle les objets vont être affichés de sorte que les coordonnées de position après mouvement sont maintenues dans la zone d'affichage dans laquelle les objets vont être affichés ; et
des moyens de rendu (33) qui effectuent le rendu des objets dans la zone d'affichage,

**caractérisé en ce que** les moyens de modification de coordonnées de position (43) sont agencés pour modifier les coordonnées de position après mouvement des objets qui sont à l'extérieur de la zone d'affichage dans laquelle les objets vont être affichés de sorte que les coordonnées de position après mouvement sont maintenues dans la zone d'affichage en réalisant un processus de masquage pour acquérir les bits d'ordre inférieur des coordonnées de position après mouvement sur la base d'une conjonction entre les coordonnées de position après mouvement définies dans des entiers des objets qui sont à l'intérieur et à l'extérieur de la zone d'affichage, et une longueur d'un côté de la zone d'affichage, qui a une valeur égale à une puissance n de 2 et de laquelle la valeur 1 a été soustraite, et en modifiant les coordonnées de position après mouvement impliquées dans le processus de masquage en fonction de la position de l'origine d'un système de coordonnées relatives pour les objets.

5. Dispositif de jeu vidéo selon la revendication 4, dans lequel le dispositif de jeu vidéo (100) fonctionne en outre en tant que moyen de mémorisation de texture (34) qui mémorise une pluralité de données de texture qui expriment différentes formes ; et
les moyens de rendu (33) effectuent le rendu des objets en fonction des données de texture mémorisées dans les moyens de mémorisation de texture (34).

6. Dispositif de jeu vidéo selon la revendication 5, dans lequel la pluralité de données de texture comprend des données de texture qui expriment de la neige.

7. Dispositif de jeu vidéo selon l'une quelconque des revendications 4 à 6, dans lequel le dispositif de jeu vidéo (100) comprend une unité de traitement arithmétique (31) qui peut exécuter divers processus comprenant un traitement de computation, et une unité de traitement de rendu (32) qui est prévue exclusivement pour le traitement de rendu ; et l'unité de traitement de rendu (32) fonctionne en tant que moyen de calcul de coordonnées de position (42) et moyen de modification de coordonnées de position (43).

*Fig. 1*

EP 1 506 530 B1

# Fig. 2

34 Data storage unit
44 Snowflake data storage unit

35 Program storage unit
45 Storage medium

36 Display unit

37 Operation unit

31 Arithmetic processing unit
41 Game execution processing unit

32 Render arithmetic processing unit
42 Position coordinate computation unit
43 Position coordinate modification unit

33 Render processing unit

*Fig. 3*

(a)

A1

(b)

A2

*Fig. 4*

START

Initialize — S1

Compute camera matrix — S2

i = 1 — S3

Compute post-movement position coordinates of snowflakes — S4

Mask process coordinates — S5

Convert to camera coordinate system — S6

Rendering process — S7

i = i + 1 — S8

i ≦ snow_max? — S9
Yes / No

Update parameters — S10

Game execution process — S11

## Fig. 5

## Fig. 6

```
                    ( START )
                        |
                        v
            +-----------------------+
            |      Initialize       |----S101
            +-----------------------+
                        |
                        v<-------------------------+
            +-----------------------+              |
            |  Compute camera matrix |----S102     |
            +-----------------------+              |
                        |                          |
                        v                          |
            +-----------------------+              |
            |         i = 1         |----S103      |
            +-----------------------+              |
                        |                          |
                        v<--------------+          |
            +-----------------------+   |          |
            |   Compute position    |----S104      |
            |coordinates of snowflakes|  |          |
            +-----------------------+   |          |
                        |               |          |
                        v               |          |
            +-----------------------+   |          |
            |   Convert to camera    |----S105      |
            |   coordinate system    |  |          |
            +-----------------------+   |          |
                        |               |          |
                        v           S106 |          |
                   <Inside display area?>---Yes----+|
                        |                          ||
                        | No                       ||
                        v                          ||
            +-----------------------+              ||
            | Reconstruct snowflake  |----S107      ||
            |         data          |              ||
            +-----------------------+              ||
                        |<------------------------+|
                        v                          |
            +-----------------------+              |
            |    Rendering process   |----S108      |
            +-----------------------+              |
                        |                          |
                        v                          |
            +-----------------------+              |
            |       i = i + 1        |----S109      |
            +-----------------------+              |
                        |           S110            |
                        v                          |
       Yes<--< i is less than the >                |
            <number of snowflakes? >               |
                        |                          |
                        | No                       |
                        v                          |
            +-----------------------+              |
            |   Update parameters    |----S111      |
            +-----------------------+              |
                        |                          |
                        v                          |
            +-----------------------+              |
            | Game execution process |----S112      |
            +-----------------------+              |
                        |                          |
                        +--------------------------+
```

## Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10031410 A

- US 20020032053 A

**Non-patent literature cited in the description**

- *PATENT ABSTRACTS OF JAPAN,* 30 April 1998, vol. 1998, 06